# EUROPEAN PATENT APPLICATION

(11) **EP 1 667 407 A1**
(43) Date of publication of application: **07.06.2006**
(21) Application number: 04257487.1
(22) Date of filing: 01.12.2004
(51) Int. Cl.: H04L 29/12

(54) **Network address translation by the home network domain of a moving network**

(71) Applicant: SIEMENS AKTIENGESELLSCHAFT, 80333 München (DE)
(72) Inventor: Boukis, Konstantinos, London SW7 5RR (GB); Eisl, Jochen, 85748 Garching (DE); Farr, Louise, Ipswich IP3 8PB (GB)

(57) **Abstract**

The invention relates to a method and an access point for transferring data packets between a first portable source endpoint (PN) belonging to a first, preferably mobile network (VN) and a second destination endpoint (CN) belonging to a second, preferably packet oriented network, wherein the first network may be moving relatively to the second network. The invention is characterized in that:
address translation is performed by the home domain of the first moving network (VN), wherein the address of the first endpoint is associated to the home address of the first moving network (VN).

## Description

A method to transfer data packets between a first portable source endpoint belonging to a moving network and a second destination endpoint belonging to a second, preferably packet oriented network

The invention relates to a method and an access point for transferring data packets between a first portable source endpoint belonging to a first, preferably mobile network and a second destination endpoint belonging to a second, preferably packet oriented network, wherein the first network may be moving relatively to the second network.

### BACKROUND OF INVENTION

The invention is relevant to assign addresses to nodes, which are connected to a moving network, i.e. a network, which can change location at some point in time.

It is presented a description of a concept for enabling hosts, such as notebooks, personal digital assistants (PDAs) and other network devices attached a moving network to initiate and maintain communications (such as TCP/IP or RTP/UDP connections) with other nodes on the Internet.

A moving network is a "network in motion", that is a collection of portable nodes (PNs), which move together with (at least) one of them (the mobile router, MR) having a backhaul connection and thus providing the PNs with connection to the rest of the network. A group of moving nodes which commonly move with the same ground speed in the same direction constitute to a moving network. There is at least one gateway router, called mobile router here, which provides access for the contained client nodes (portable nodes) towards external networks. A correspondent node is reached through a transport network in the backhaul.

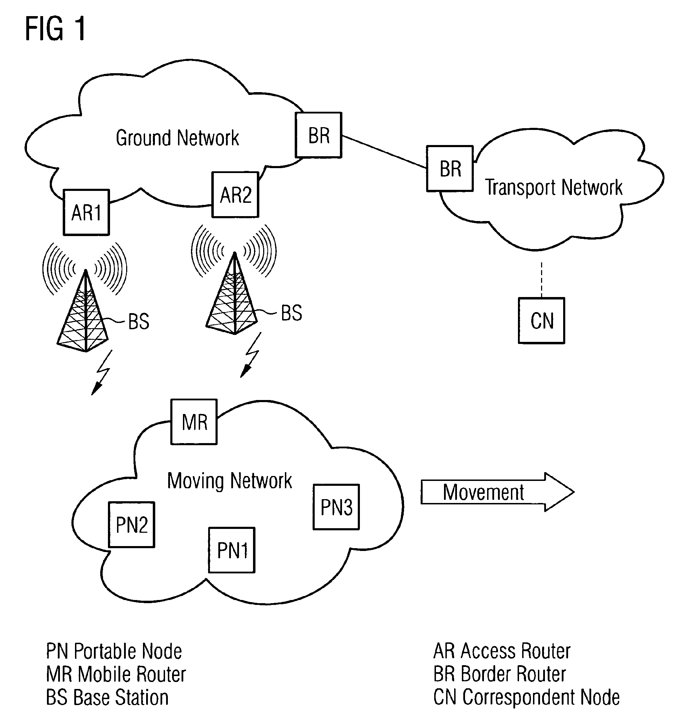

A Personal Area Network (PAN) in a car or a train network is imaginable such as a managed vehicular network (VN) to represent examples of moving networks. The architecture of a moving network consists of one or more special gateway routers. Such a Mobile Routers (MR) is enabled with a Mobility Protocol (e.g. Mobile IP (MIP)) to update location information for the moving network in external networks, e.g. network domains in the Internet and to facilitate handover procedures in case there are triggering events, such as movement, profile change etc. In addition to one or more MR there are a number of devices and user terminals that attain connectivity through the MR. The term portable node (PN) is used to refer to those devices, which can be carried by a user and may or may not support mobility, i.e. run a protocol for location updating and handover. However the invention described here does not rely on this assumption. Figure 1 illustrates the network topology, which is in the focus of this invention.

The problem that has to be addressed is the mobility of the whole network. When the VN changes its point of attachment a mechanism must be applied so as to forward to the current location of the VN datagrams destined to nodes in it.

Prior-art mobility management protocols provide support for individual nodes. Extra functionality might be applied to those protocols for supporting networks with the drawback of modifications. The approach where all nodes within the VN are enabled with mobility functionality is not sophisticated since the amount for required location update signalling after handover depends on the number of portable nodes that require such mobility services from the network. Apart from that, the requirement for each PN running a mobility protocol, such as Mobile IP (MIP) eliminates the number of possible nodes that could be part on the VN, since there is no installed base of mobility protocols on PNs.

### SUMMARY OF INVENTION

The present invention aims to overcome the above mentioned disadvantages.

Said problem is solved by the features mentioned in the independent claims. Preferred embodiments of the invention are described in the dependent claims.

A main aspect of the invention is a method for address translation performed by the home domain of the first moving network, wherein the address of a first endpoint is associated to the home address of the moving network. Further aspects of the invention are a mobile access point and a home access point to perform the above mentioned method.

The proposed algorithm provides support for both mobility aware and unaware nodes since the VN's mobility is hidden from he PNs. The IP address assigned to the PN remains unchanged through out the whole duration of the PN's connection to the VN. Additionally another problem that is tackled by the proposed mechanism is the handover from one VN to another, provided that the VNs are managed by the same operator.

The general concept of the invention is to use address translation to associate PNs CoA (temporary address) with the MR home address(es). In the following Mobile IP (MIP) is mentioned, but this is an exemplification and in principle other mobility protocols/mechanisms could be taken into account as well. The translation is performed accordingly to a set of identifiers that are used to distinguish inbound and outbound packets and determine which address is used for translation. Translation enables network mobility to be supported without altering existing mobility mechanisms, such as the MIP protocol running on the MR or MR home agent, and further overcomes the addressing restrictions discussed previously. A key feature of the translation is that it uses information from an element external to the network address translator (NAT), i.e. information that is neither encoded within the IP packet header nor statically configured into the NAT unit.

It is assumed that the MR is MIP enabled which means that it has the ability to maintain all ongoing sessions while changing its point of attachment to the Internet. MIP achieves its goals with the aid of a special router - the Home Agent (HA), which is situated in the home network of the mobile node. Packets destined to a MIP enabled node will be directed towards its home network with conventional IP routing. Once within the home network, the packets are intercepted by the HA and tunnelled through to the current IP address (CoA) of the MIP enabled node. Tunnelling refers to the situation, where a packet is encapsulated at an ingress node and de-capsulated at an egress router to enforce the packet to travel on a fixed network path. Thus although MIP takes care of the delivery of packets from the MR home network to the MR care-of address, no support is provided for packets destined to nodes in the VN. This can be solved if address translation is performed on all packets generated from PNs in the VN. In every IP packet generated from the PNs the source address field is replaced by an MR home address, HoA. This results in response packets generated by correspondence nodes, CNs, to be destined to the same address (MR HoA) and consequently, with the aid of MIP, the packets are finally delivered to their final destination.

When a node connects to the VN it attains an IP address from the MR. Since this is a private address in principle it may not have to obey to any addressing restrictions imposed for routing packets in public networks. Different mechanisms can be employed for achieving this. One option is the dynamic allocation of an IP address for the PN e.g. through means of Dynamic Host Configuration Protocol (DHCP). A different address allocation mechanism is associated with stateless auto-configuration like suggested for IPv6 networks. Any valid address space (which can be used for routing packets) can be used for providing addresses to hosts. This is a consequence of the address translation, which hides the real address of the hosts from other nodes on the Internet. More precisely the addresses assigned to the PNs are employed only for the communication with the VN. This gives a broader scope of possible addresses to allocate to PNs. Private addresses and MR subnet addresses are only one subset of the possible address range.

The major advantages of the proposed invention are:
1. The mobility of a whole network is efficiently supported with only one node, the MR, enabled with mobility functionality. Subsequently the overhead of the messages necessary for mobility information update is much decreased compared with the case where all nodes are Mobile IP enabled and updates must be sent for every single one of them. Apart from that no modifications are required to the Mobile IP functionality.
2. Mobility transparency. More precisely the nodes in the VN are unaware of the VN's migration among ground networks.
3. For the invention no special functionality is required from the nodes in the VN; all the necessary procedures are performed from home agent and network address translator in the MR home network domain.
4. Versatile addressing scheme. The address space from which addresses are assigned to nodes in the VN can be literally anything. Since address translation is performed the address that the CN sees is the MR's home address and not the address assigned from the VN to the nodes. For that reason any address space can be employed. This differs from the IETF approach where the address space assigned to the VN is a subnet of the MR's home network.
5. VN to VN handover with no action required from the PNs. As described in section 3 with minor modifications to the HA's functionality the PNs can migrate from one VN to another while keeping all ongoing sessions uninterrupted with the only modification the routing table update.
6. Furthermore this proposal works together with IPv4 as well as IPv6, and by no means is it bounded to any specific IP version.
7. Easy deployment. Address translation is processing-light task and as a result no restriction is put to the number of supported PNs.
8. The use of compression to the outgoing packets reduces the cost charged from the access network, in case where traffic is charged per byte.
9. The address translation mechanism can take into account information external to the IP header, e.g. any kind of policy or state information and therefore influence traffic flow e.g. to optimize network utilization.
10.The mechanism can be used for PNs with and without mobility support. Those, which have an address allocated from the PN home network just by-pass the translation mechanism.

### BRIEF DESCRIPTION OF THE DRAWINGS

Preferred embodiments of the present invention will now be described with reference to the accompanying drawing in which:
The figure 1 illustrates the network topology, which is in the focus of this invention,
The figure 2 a typical network topology in the case a vehicular network is connected with the home network domain via a mobile access point,
The figure 3 a typical network topology in the case a vehicular network is not connected with the home network domain,
The figure 4 a typical message flow between the source endpoint and the destination endpoint,
The figure 5 a typical network topology for mobility enabled endpoints,
The figure 6 a flow chart concerning the functionality of a home access point for packet processing of inbound traffic and
The figure 7 a flow chart concerning a packet analysing process.

### DETAILLED DESCRIPTION OF THE DRAWINGS

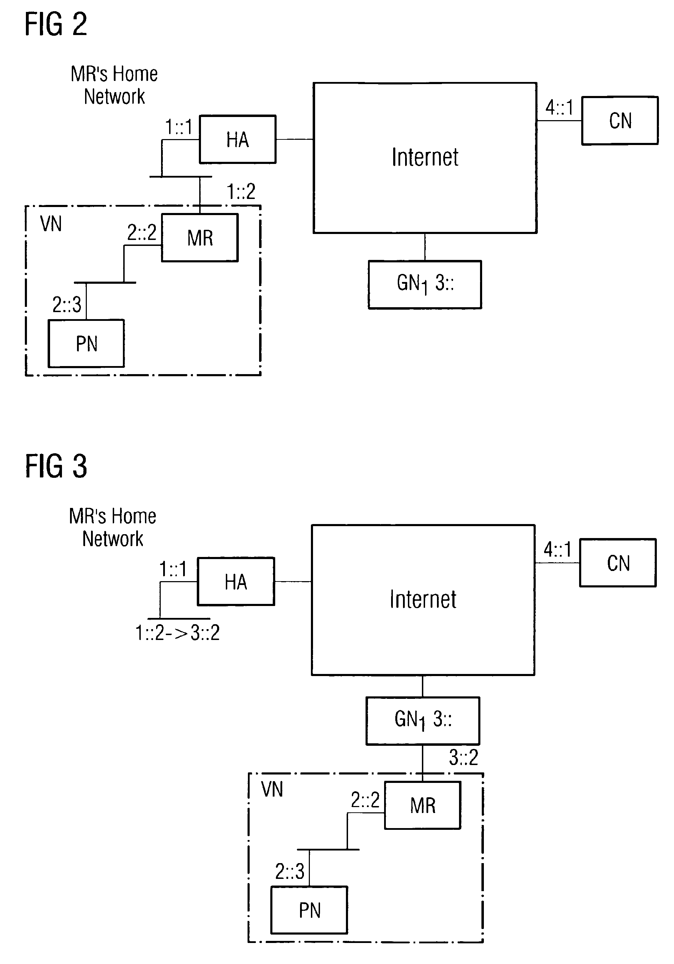

It is assumed that the HA of the MR is responsible for performing the address translation. Figure 2 depicts the network topology where the VN is initially connected to the Internet through the MR's Home Network (this is not an essential starting point). We are using the notation x::y to represent the network id::host id elements of an IP address. Thus x:: is a network identifier, whereas x::y is host y of network x. The links connecting the nodes denote network layer connections and nothing is implied for the layer two links used. It can be recognized that the network prefix of the moving network home domain and the CoA are the same (1:: and therefore the VN is connected to its home domain).

In figure 3 the VN has migrated from the home network (prefix 1::) where it was originally connected to another network. After the accomplishment of the handover the MR has notified the HA of its Care-of-Address (prefix 3::) which the MR HA inserts in its binding cache, i.e. the storage which keeps mappings between home address (HoA) and temporary address (CoA). Note that when the VN changes the point of attachment, the addresses in the VN are unchanged (the network prefix for the allocated private addresses is the same, 2:: in the example). Packets destined to the MR will be tunnelled by the HA to this CoA. Moreover a bi-directional tunnel is established between the MR and the MR HA. The MR uses this tunnel as the default route for all packets generated by the PNs. As a result all packets transmitted from nodes in the VN pass though the MR's HA.

After a PN has been granted an IP address and has installed the MR as the default router, it is ready to embark communication with other nodes on the Internet. The PN will construct all IP packets in the same way as if it was in a stationary IP network and it will forward them as usual to its default router, the MR in this case. As expected, the source address field of the IP header is set to the IP address assigned to the PN from the MR and the destination address field is set to the IP address of the node with which the PN wishes to communicate.

The MR will receive the packet and it will tunnel it to its HA. Prior to the encapsulation the MR could compress the original IP packet for efficiency purposes. Reducing the upload traffic is beneficial because the available bandwidth is exploited more efficiently and also the financial cost charged from the Ground Network, GN, is reduced in cases like GPRS networks for example where traffic is charged per byte.

When the HA receives the encapsulated packet it removes the outer packet header information and forwards the packet, with additional information, to the NAT device. The additional information is used to manage the address mapping and can include for example the following information:
- the MR, which routed the packet,
- network policies from the operator of the MR home network domain,
- user policies, specified e.g. when the PN attaches to the VN.

The NAT device then uses this information, plus information encoded within the packet header (for example the PN source address, the source and destination port identifiers) to maintain its address-mapping table. Finally, the NAT device replaces the PN source address with an address from the MR home network prefix before forwarding the packet along the next hop towards its destination. For IPv4, the checksum of the IP header must also be recalculated.

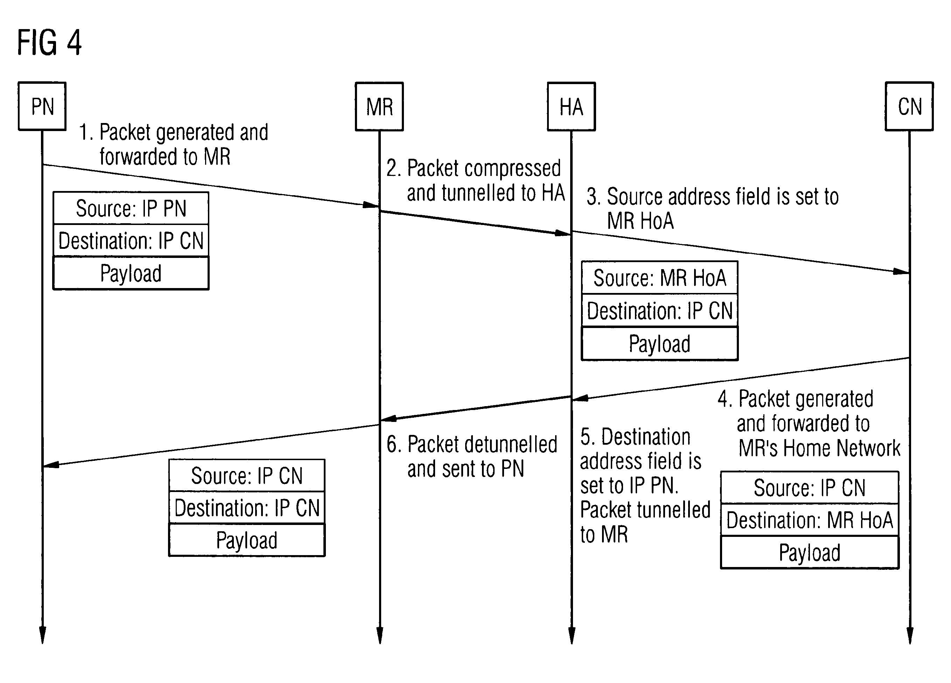

When the packet reaches the CN it appears as if the MR sent the packet from its home address since the source address field is set to the MR's HoA. As a result, response packets generated from the CN contain the MR's HoA in the destination address field, and are routed with conventional IP routing to the MR's Home Network. Here, the NAT device captures the packets and checks the address mapping table so as to determine if reverses translation is required to the packet. If a match is found then reverse translation is required and consequently the destination address field is altered. More precisely the address allocated to the PN is places instead of the MR's HoA. After the translation, the HA tunnels the packet to the MR, using the MR's CoA as the destination address field of the outer IP packet. (How the packet reaches the HA depends upon whether the HA and NAT are an integrated device or not.) When the packet reaches the MR it is decapsulated and finally forwarded to the PN. If no entry is found to indicate that the packet should undergo translation the NAT realises that this is a MR destined packet. The diagram in figure 4 shows the packet transformations through the communication path between the PN and CN. Note that the socket pair (PN source address - TCP/UDP port at PN; CN source address - TCP/UDP port at CN) is not changed at any end of the communication path and as a result the communication between PN and CN is maintained regardless of the VN's current location.

It has been described how communication is achieved between nodes in the VN and other nodes on the Internet while the VN is away from the MR's home network. The same mechanism is applied when the VN is in the home network, with the only variation being the absence of the tunnel between the MR and the HA. Outbound packets generated from the PN are forwarded to the MR and from there to the NAT without the presence of a tunnel. Translation is performed again and the packet is forwarded to the final destination with conventional IP routing.

A key feature of the proposed invention is the capability of the PNs to handover from one VN ton another, e.g. a passenger leaves a train in the station and enters another one. This can occur when both VNs are managed by the same operator, and thus both MRs are being served by the same (or co-ordinated) HA. Extra intelligence installed at the MR HA would enable PNs to migrate from one VN to another while keeping the same IP address, hence maintaining all active network connections. Since datagrams destined to the PN are delivered towards their destination with the aid of tunnels it is possible for a PN to move from one VN to another and the only requirement would be for the MR HA to tunnel PN destined messages to the appropriate VN.

In the case where the PN does not change the VN, inbound traffic at the home agent can be routed based on a certain address prefix, which uniquely identifies the destination VN. If handover between different VNs should be supported, while the PN keeps the address, the destination VN can't be identified based on the address prefix of the destination address for inbound packets. Addressing is managed by a central node, the HA, so as to avoid address duplication conditions i.e. where the same IP address is assigned to more than one PN. Whilst centralized addressing affects the HA performance, it offers the advantage that every PN is identifiable by a unique IP address.

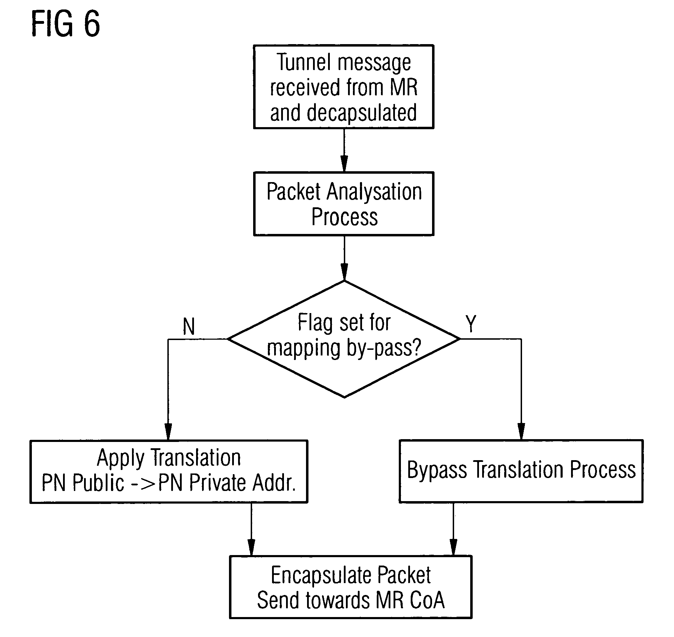

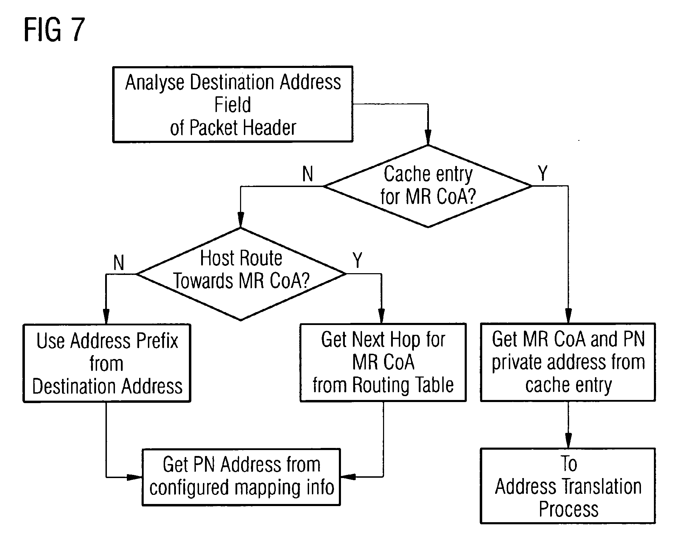

When a PN migrates to a different VN, the routing tables in the MR home network have to be updated according to the router advertisements received from the new MR. For outbound traffic, sent by the PN the mechanism for decapsulation and translation in the MR home network are the same just like for a single VN supported by the home network. When the PN sends a datagram, the packet as before is tunnelled to the HA and decapsulated. Before forwarding the packet to the destination address, i.e. the CN, the correct PN source address has to be determined, which is used for address translation. The forwarding of inbound traffic also requires additional steps at the HA compared to the situation with just single VN home networks. For inbound traffic destined for a PN, the correct VN has to be determined before address translation and packet encapsulation can take place. The shortcoming of this solution is that the HA needs to do per host instead of prefix based routing, which delays the forwarding process to some extend. This can be partly compensated if address mappings are cached based on inbound and outbound traffic as well. With this procedure handovers between different VNs have no effect on communication between the PN and the CN since the socket pair remains unchanged at both ends. As a result the PN can move around the VNs and the NAT will be responsible for keeping the same address for address translation and also for tunnelling datagrams destined to the PN to the correct VN. The flowchart of figure 6 summarizes the HA's functionality for inbound traffic sent towards the PN. In figure 7 the part of this process is illustrated, which is responsible for analyzing the packets.

However the PN may specify during the initial registration with a VN the demand for a future handover to a different VN. In this situation an address could be allocated to the PN from a special address prefix, which indicates that per host routing is required in the home network domain. Consequently if the PN would not specify its demand for future VN handover, prefix based routing can be applied for packets destined for those PNs. Thus per host routing would be required just for those PNs, which require VN handover in the future.

In the case where the PN is enabled with mobility functionality (i.e. runs a mobility protocol and sends location update information to its home agent) some additions must be applied, because the address assigned to the PN from the MR cannot be employed with macromobility protocols as the address known to the PN may not be globally reachable. One approach to this problem, which has been adopted within the IETF NEMO working group, requires that the address assigned to a PN belongs to a subnet of the MR's home network. Then datagrams directed by the PN home agent will reach the MR's home network, and from there can be delivered to the VN. However, as in the NEMO case, the inefficiency of double tunnelling occurs.

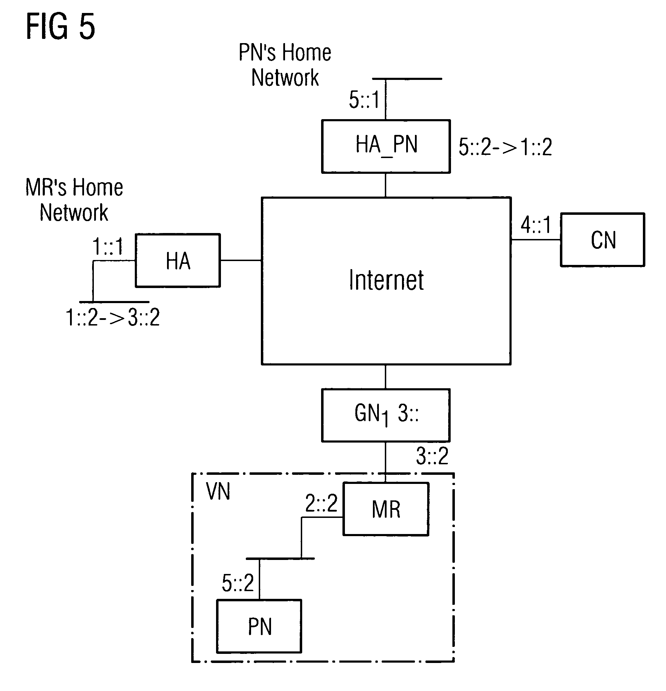

The topologically irrelevant address problem can be surmounted if the PN registers a specific MR home address as a CoA with its home agent (PN_HA). In this case the PN_HA will forward all packets destined to the PN to this address and consequently the datagrams will be captured by the Home Agent of the MR, as shown in figure 5. The MR HA identifies that the datagram is a tunnel packet sent from another home agent and therefore it does not go through translation as with other packets but the packet is tunnelled direct to the MR. The request for translation ignorance is based on the allocated PN address, which comes from a specific MR prefix. This section contains the functions performed according to the described algorithm during a PN session. First is portrayed the scenario where the translation is executed at the HA. For outband packets:

### Scenario 1: PN registration

- Step 1:: The PN attaches to VN and starts with accounting process or the PN asks for a global address at any time later.
- Step 2:: The VN advertises network services to be offered, e.g.
- single address support,
- handover support to other VNs,
- support for MIP enabled PNs,
- etc.
- Step 3:: The PN finalizes the registration by specifying the service request.
- Step 4:: The MR request CoA for PN.
- Step 5:: HA allocates a private and a public address for the PN. The NAT device stores the address mapping for the PN and the MR is used as the default router for the PN.

### Scenario 2: Translation for outbound traffic in MR home network

- Step 1:: The PN wishes to initiate a session with another node on the Internet. The packets are constructed and forwarded to the MR as if the PN was in a stationary network.
- Step 2:: The MR receives the packet and tunnels it to the HA.
- Step 3:: The HA de-capsulates the packet and check its list of identifiers.
- Step 4:: Address translation is performed, the PN private address in the source address field of the packet is replaced with an address from the prefix in the MR home network. The PN source address to be used can be determined by information, which is configured in the MR home network domain and IP header information. Additionally for IPv4 packets the checksum is recalculated.
- Step 5:: The HA stores the appropriate information identifiers for performing reverse address translation. That is the address of the PN, source port, address of the CN and destination port. The care-of address of the MR is also stored.
- Step 6:: The packet is forwarded to its destination.

### Scenario 3: Translation for inbound packets in MR home network

- Step 1:: The CN sends response packets to the MR's HoA. With conventional IP routing those packets are delivered to the MR's home network.

- Step 2:: Based on the network address prefix of the destination address, the destination VN and its appropriate CoA is identified.
- Step 3:: The HA captures the packets and performs reverse address translation according to the stored identifiers. The destination address field is replaced with the IP address of the PN and the checksum is recalculated for IPv4 packets.
- Step 4:: The packet is tunnelled to the MR where it is currently situated. This information is stored in the HA.
- Step 5:: The MR decapsulates the packet and forwards it to the PN.

### Scenario 4: Handover between VNs

In the case where a PN performs a handover to another VN managed by the same operator the following steps are followed. Note that in this scenario addressing is managed by the HA thus the IP address that is assigned to the PN is unique.
- Step 1:: The PN migrates to another network and updates its routing table according to the router advertisements received from the new MR, i.e. now a different MR is the new default router.
- Step 2:: MR in the new VN sends a registration for PN and the HA updates the stored identifiers, and therefore associates the PN private and public address with a new MR.
- Step 3:: The PN sends IP datagrams according to the already running TCP/IP connections.

- Step 4:: The packet is tunnelled from the MR to the HA.
- Step 5:: The HA checks its cash table to verify the stored identifiers. After detecting no cache entry the HA creates a new one for the identified connection.
- Step 6:: The HA performs address translation using the old MR's IP address for maintenance of ongoing sessions. The address of the MR where the PN is now located is also stored.
- Step 7:: The translated datagram is forwarded to its destination. Packets on the reverse path are processed as in the previous scenario.

### Scenario 5: Packets, which by-pass the translation process

- Step 1:: The PN registers at MR with information about its PN Home Network (PN HoA etc.).
- Step 2:: This information is delegated to the MR HA.
- Step 3:: The PN obtains an address from a special MR HA prefix, which indicates that address translation is not required. PN registers this address with its home network.
- Step 4:: Outbound traffic is sent via MR-MR HA to the CN.
- Step 5:: For inbound traffic that is sent via PN HA to the MR HA it is recognized that address translation is not needed due to the special significance of the address prefix.
- Step 6:: The packet is encapsulated without translation and sent towards the CoA of the MR.

### DEFINITION

- MR:: Mobile Router: the gateway device of the moving network that physically connects the moving network to the rest of the world, i.e. external networks like the Internet.
- PN:: Portable Node: a node that is connected to the Internet through the mobile router. There may be many PNs associated with one MR.
- CN:: Correspondent Node: a node within the Internet that communicates with the PN.
- CoA:: Care of Address: an address allocated by a visited network (i.e. a network, which is not part of the home domain associated with a user) to a node that joins it.
- MIP:: Mobile IP: this is a method of ensuring that mobile nodes remain reachable, by allowing them to associate a CoA with their well-known (e.g. DNS registed) home address. Basic MIP assumes that the network is fixed and only the end terminal moves.
- GN:: Ground Network: the network to which the MR directly physically connects.
- VN:: Vehicular Network: is a special instantiation of a moving network like a train or plane network providing services to the passengers. In general the term VN is mostly used in the following although the more general term "moving network" applies.
- HA:: Home Agent: this term comes from Mobile IP based mobility management and describes a routing component that redirects messages to the current location of a mobile node.
- HoA:: Home Address: an address, which is allocated by the home network domain. It can be regarded as a fixed address for a node, which has a subscription with the operator of this network domain.
- NAT:: Network Address Translation: address translation usually is required, if packets are routed between transport networks and private network domains, as within these private domains private addresses are often allocated to client nodes.

## Claims

1. A method to transfer data packets between a first portable source endpoint (PN) belonging to a first, preferably mobile network (VN) and a second destination endpoint (CN) belonging to a second, preferably packet oriented network, wherein the first network may be moving relatively to the second network,
**characterized in that**:
address translation is performed by the home network domain of the first moving network (VN), wherein the address of the first endpoint (PN) is associated to the home address of the first moving network (VN).

2. A method according to the preceding claim, wherein the address translation is performed accordingly to a set of identifiers that are used to distinguish the packet and determine which address is used for translation.

3. A method according to any preceding claim, wherein for address translation preferably static configuration parameters, address header information, user/network policies, state information related to a packet and/or state information related to the current location of the first moving network can be considered.

4. A method according to any preceding claim, wherein in the case that data packets are destined to the first endpoint (PN) network address translation is applied, before data packets are forwarded to the current location of the first moving network (VN).

5. A method according to any preceding claim, wherein in the case that data packets are originated by the first endpoint are forwarded to the home network domain of the first moving network (VN), in the home network domain the source address field is replaced with the home address of a mobile access point (MR), particulary a mobile router, located in the first moving network (VN) which corresponds to the first endpoint (PN).

6. A method according to any preceding claim, wherein a tunnelling mechanism is used, which hides the private address allocated by the first endpoint (PN) from any transport network located outside the first moving network (VN).

7. A method according to any preceding claim, wherein the home domain of the first moving network serves several moving networks.

8. A method according to any preceding claim, wherein each served moving network is assigned an individual network address prefix by the home domain.

9. A method according to any preceding claim, wherein a endpoint attaching as the first endpoint (PN) to a first moving network (VN) obtain a private and a public address during the authentication procedure or just a private address and a public address at any time later.

10. A method according to any preceding claim, wherein a handover process from a first moving network to a further moving network is supported by the home network domain by associating the address of the first endpoint (PN) moved to the further moving network with the address of the further moving network.

11. A method according to any preceding claim, wherein after initiating the handover process the data packets are sent to both moving networks until the handover process is completed.

12. A method according to any preceding claim, wherein an endpoint (PN) with a future handover request can be allocated an address from a specific network address prefix maintained by the moving network domain.

13. A method according to any preceding claim, wherein an endpoint obtains an address from a network prefix with special significance which is registered with the endpoint's home network domain and which aims to by-pass the network address translation process in the home network domain.

14. A mobile access point (MR) to perform the method according to any preceding claim which is located in a moving network, comprising means for employing a tunnelling mechanism for the transfer of data packets, which hides the private address allocated by the first endpoint(PN) from any transport network located outside the moving network (VN).

15. A home access point (HA) to perform the method according to any preceding claim which is located in the home network domain comprising means for address translation, preferably to replace the source address field with the home address of a mobile access point (MR) according to claim 14 and vice versa.
